# EUROPÄISCHE PATENTSCHRIFT

(11) **EP 0 322 710 B1**
(45) Veröffentlichungstag und Bekanntmachung des Hinweises auf die Patenterteilung: **21.04.1993**
(21) Anmeldenummer: 88121285.6
(22) Anmeldetag: 20.12.1988
(51) Int. Cl.: B24B 41/04, B23Q 1/08

(54) **Lagerung für Hochgeschwindigkeits-Spindeln von Werkzeugmaschinen**
High-velocity bearing for a machine tool spindle
Palier à grande vitesse pour la broche d'une machine-outil

(30) Priorität: 24.12.1987 DE 3744040; 30.12.1987 DE 3744522
(43) Veröffentlichungstag der Anmeldung: 05.07.1989
(73) Patentinhaber: Junker, Erwin, D-77787 Nordrach (DE)
(72) Erfinder: Junker, Erwin, D-77787 Nordrach (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- CH-A- 246 064
- DE-A- 2 166 602
- US-A- 2 850 338

## Beschreibung

Die Erfindung betrifft eine Lagerung für Hochgeschwindigkeits-Spindeln von Werkzeugmaschinen, insbesondere Schleifmaschinen, mit wenigstens einem vorderen, nahe dem Spindelflansch angeordneten und einem hinteren Lager, die jewei!s wenigstens drei winkelgleich an der Spindel angreifende Stützrollen größeren Durchmessers als die Spindel aufweisen.

An Spindeln bzw. Antriebswellen moderner Werkzeugmaschinen werden hohe Anforderungen hinsichtlich der Arbeitsgeschwindigkeit gestellt. Dies erfordert bei umlaufenden Werkzeugen, z. B. Schleifscheiben, hohe Drehzahlen am Werkzeug bzw. der sie treibenden Spindel. So werden beim Hochgeschwindigkeitsschleifen Spindeldrehzahlen über 100.000 l/min erforderlich, die sich mit herkömmlichen Wälz- oder Gleitlagern nicht mehr beherrschen lassen, insbesondere ist es aufgrund der auftretenden extremen Fliehkräfte nicht möglich, in der Lagerung die notwendige Steifigkeit zu erzielen, die für eine genaue Bearbeitung erforderlich ist.

Es hat deshalb nicht an Versuchen gefehlt, diese Steifigkeit durch Abkehr von der konventionellen Lagertechnik zu erreichen, indem beispielsweise die Spindel zwischen Stützrollen größeren Durchmessers aufgenommen wird, die ihrerseits als planetarisch umlaufende Rollen in einem stationären Außenring des Spindelgehäuses gelagert sind. Aufgrund des größeren Durchmessers der umlaufenden Stützrollen findet eine Drehzahlerniedrigung statt, so daß sich zumindest theoretisch die Fliehkräfte in der Lagerung besser beherrschen lassen. In der Praxis allerdings versagt diese Methode, da die enorm hohen Genauigkeitsanforderungen, die an Werkzeugmaschinen der hier zur Rede stehenden Art gestellt werden, sich nicht realisieren lassen. Aufgrund der vielen Lagerflächen in unterschiedlicher räumlicher Anordnung, nämlich Spindel/Stützrollen und Stützrollen/Außenring, ist diese Lagerung auch bei genauester Fertigung und Montage der Lagerteile zwangsläufig spielbehaftet und damit nicht steif genug, um eine präzise Bearbeitung zu ermöglichen.

Der Erfindung liegt die Aufgabe zugrunde, eine Lagerung zu schaffen, die bei Drehzahlen bis in den Bereich von 150.000 l/min noch eine ausreichende Steifigkeit aufweist, um auch bei diesen Höchstgeschwindigkeiten noch eine präzise Bearbeitung zu ermöglichen.

Ausgehend von der eingangs beschriebenen Lagerung wird diese Aufgabe erfindungsgemäß dadurch gelöst, daß die Stützrollen ortsfest angeordnet und mit beidseitig vorgesehenen Rollenzapfen in Präzisionslagern kleinen Durchmessers in dem die Spindel und die Stützrollen aufnehmenden Gehäuse gelagert sind.

Durch die Aufnahme der Spindel zwischen größeren Stützrollen findet auch beim Gegenstand der Erfindung zunächst eine Drehzahlreduzierung an den Stützrollen im Verhältnis Spindel-Durchmesser zu Stützrollen-Durchmesser statt. Diese kleinere Drehzahl läßt sich lagertechnisch in kleinen Präzisionskugellagern, beispielsweise mit einem Bohrungsdurchmesser von 15 mm aufgrund der ortsfesten Anordnung der Stützrollen relativ problemlos aufnehmen. Aufgrund der ortsfesten Anordnung der Stützrollen weist die Lagerung eine große Steifigkeit auf und es lassen sich auch die für die Bearbeitungsgenauigkeit notwendigen engen Toleranzen innerhalb der gesamten Lagerung verwirklichen.

Um jegliches Spiel - auch nach längerer Betriebsdauer - auszuschließen, ist gemäß einer bevorzugten Ausführungsform vorgesehen, daß die Spindel als Lagerflächen gegeneinander geneigte Kegelabschnitte aufweist und daß die Stützrollen mit ihrer Achse parallel zur Mantelfläche der Kegelabschnitte angeordnet und wenigstens die Stützrollen eines Lagers achsparallel zur Spindel verstellbar sind.

Aufgrund der vorgenannten Merkmale ist es möglich, die Lagerung vorzuspannen, indem die Stützrollen wenigstens eines Lagers verstellbar sind. Dabei kann vorgesehen sein, daß die Stützrollen wenigstens eines Lagers einzeln und/oder gemeinsam achsparallel zur Spindel verstellbar sind.

Durch die Verstellung einzelner Stützrollen, wie auch aller Stützrollen gemeinsam, können die Lager in Achsrichtung der Spindel vorgespannt werden, also eine spielfreie Lagerung erzielen und auch während langer Betriebsdauer aufrechterhalten werden.

Zur Vorspannung einzelner Rollen oder zur gemeinsamen Verstellung aller Rollen wird mit Vorteil ein Druckmittel - hydraulisch oder pneumatisch - oder eine Federkraft vorgesehen, während eine gemeinsame Verstellung aller Stützrollen eines Lagers auch über einen Stellmotor erfolgen kann.

Das Verstellen einzelner Rollen gibt ferner die Möglichkeit, die Spindel unter definierten Winkeln schräg zu stellen bzw. zu neigen, so daß Konizitäten mit kleinem Konuswinkel geschliffen werden können oder die Schleifscheibe gegenüber dem Werkstück angestellt und somit ein Freiwinkel am Werkzeug gebildet werden kann.

Vorzugsweise erfolgt die Vorspannung ausschließlich an den Stützrollen des hinteren Lagers, das dem Spindelflansch mit dem Werkzeug ferner liegt.

Um ein korrektes Ablaufen der Stützrollen zu gewährleisten, ist deren Lauffläche vorzugsweise ballig ausgebildet, so daß - zumindest theoretisch - nur eine Punktberührung der Stützrolle am Kegelabschnitt der Spindel gegeben ist.

Schließlich ist in weiterer Ausgestaltung der Erfindung vorgesehen, daß die Spindel mittels eines auf ihr sitzenden HF-Motors angetrieben ist und daß die Lager beiderseits des HF-Motors angeordnet sind.

Durch diese Ausbildung wird eine kurze und kompakte Bauweise der Lagerung erreicht.

Nachstehend ist die Erfindung anhand eines in der Zeichnung wiedergegebenen Ausführungsbeispiels beschrieben. In der Zeichnung zeigen:
- Figur 1: einen Längsschnitt der Spindel und ihrer Lagerung;
- Figur 2: einen Schnitt II - II gemäß Figur 1 und
- Figur 3: eine vergrößerte Detailansicht einer Stützrolle.

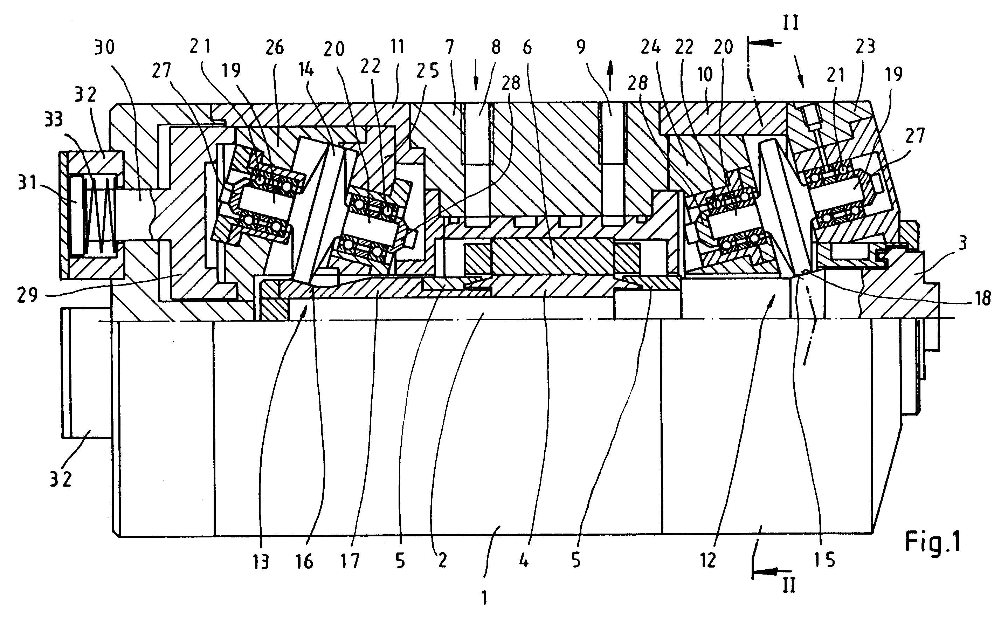

In Figur 1 ist das insgesamt mit 1 bezeichnete Gehäuse einer Spindel 2 erkennbar, die an ihrem vorderen Ende den Spindelflansch 3 zur Aufnahme eines Werkzeugs, z. B. einer Schleifscheibe, aufweist. Auf der Spindel 2 sitzt der Rotor 4 eines HF-Motors, der mittels Spannringen 5 auf der Spindel 2 befestigt ist. Konzentrisch zum Rotor 4 des HF-Motors ist dessen Stator 6 angeordnet, der vom Motorgehäuse 7 umgeben ist. Der Stator 6 und das Motorgehäuse 7 werden über einen Zufluß 8 und einen Abfluß 9 mit Kühlmittel versorgt.

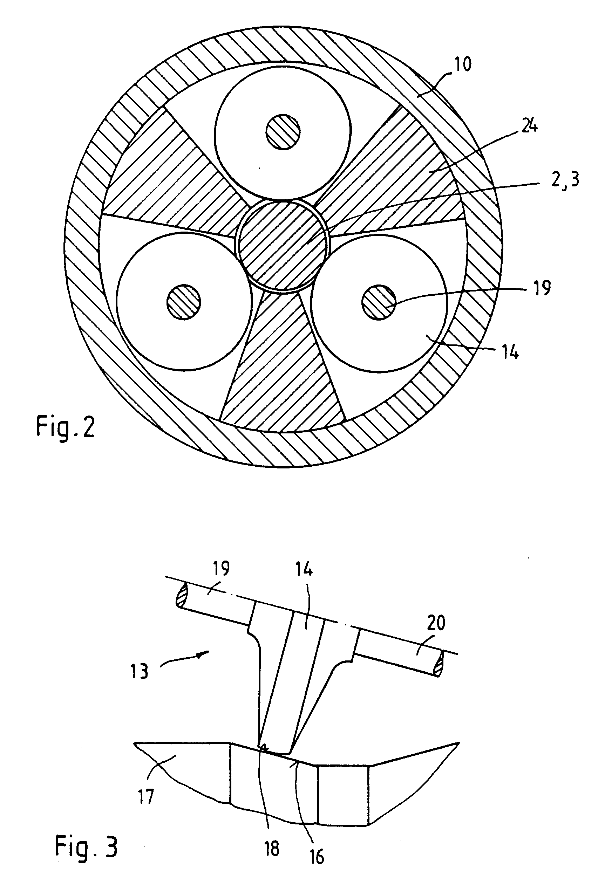

Das Motorgehäuse 7 ist Teil des Spindelgehäuses 1, das im übrigen aus einem vorderen Gehäuseteil 10 und einem hinteren Gehäuseteil 11 besteht. In beiden Gehäuseteilen 10, 11 ist je ein Lager 12 bzw. 13 angeordnet, die zusammen die Lagerung für die Spindel 2 bilden. Die Lager 12 und 13 weisen je drei Stützrollen 14 auf, die, wie aus Figur 2 ersichtlich, auf einem Umfangskreis winkelgleich angeordnet sind. Ferner weist die Spindel im Bereich der Lager je einen Kegelabschnitt 15, 16 auf, die die Lagerflächen der Spindel bilden und auf denen die Stützrollen 14 abrollen. Während der Kegelabschnitt 15 des vorderen Lagers Teil der Spindel 2 ist, ist der Kegelabschnitt 16 am hinteren Lager 13 an einer auf der Spindel sitzenden Lagerbuchse 17 ausgebildet, die zu diesem Zweck eine Einschnürung aufweist.

Die Stützrollen 14 des vorderen und hinteren Lagers 12, 13 sind an ihrer Lauffläche 18, wie aus Figur 3 ersichtlich, ballig ausgeführt, so daß sie auf den Kegelabschnitten 15, 16 im wesentlichen linienförmig abrollen.

Die Stützrollen 14 sind mit beidseitig angeordneten Zapfen 19, 20 in Präzisions-Schrägkugellagern 21, 22 kleinen Durchmessers gelagert, die ihrerseits in Lagergehäusen 23, 24 (vorderes Lager) bzw. 25, 26 (hinteres Lager) sitzen. Dabei sind die jeweils außenliegenden Präzisions-Schrägkugellager 21 als Loslager, die jeweils innenliegenden 22 als Festlager ausgebildet. Ferner sind sämtliche Präzisions-Schrägkugellager 21, 22 mit je einem Deckel 27, 28 vorspannbar, um die Stützrollen 14 spielfrei zu lagern.

Die Stützrollen 14 weisen, wie insbesondere aus Figur 2 ersichtlich, einen nennenswert größeren Durchmesser als die mit ihnen zusammenwirkenden Lagerflächen der Spindel auf, so daß die Stützrollen mit entsprechend verminderter Drehzahl umlaufen. Wie ferner aus Figur 1 ersichtlich sind die Kegelabschnitte 15, 16 unter gleichem Winkel gegeneinander geneigt. Die Stützrollen sind mit ihrer Achse jeweils parallel zu den Kegelabschnitten ausgerichtet, so daß die Umlaufebene der Stützrollen senkrecht auf den Kegelabschnitten steht.

Um die Lager 12, 13 vorspannen zu können, sind zumindest die Stützrollen 14 des hinteren Lagers 13 achsparallel zur Spindel 2 verstellbar. Zu diesem Zweck sitzen die Lagergehäuse 25, 26 an einem Stellkolben 29, der einerseits im hinteren Gehäuse 11, andererseits über eine Kolbenstange 30 und einen Bund 31 in einem außenliegenden Zylinder 32 geführt ist. Der Kolben 29 wird mittels einer im Zylinder 32 untergebrachten Feder 33 im Sinne einer Vorspannung der Stützrollen 14 nach außen gedrängt. Statt dessen ist auch eine Druckmittel-Beaufschlagung möglich und ferner kann auch ein auf alle drei Kolben 29 wirkender Stellmotor zur gleichmäßigen Verstellung sämtlicher Stützrollen vorgesehen sein. Mit dem erfindungsgemäßen Aufbau der Lagerung lassen sich die hohen Drehzahlen an den Lagerrollen mit konventionellen Spindellagern (Präzisions-Schrägkugellagern) und herkömmlicher Ölnebel-Schmierung beherrschen.

## Patentansprüche

1. Lagerung für Hochgeschwindigkeits-Spindeln von Werkzeugmaschinen, insbesondere Schleifmaschinen, mit wenigstens einem vorderen, nahe dem Spindelflansch (3) angeordneten und einem hinteren Lager (12, 13), die jeweils wenigstens drei winkelgleich an der Spindel (2) angreifende Stützrollen (14) größeren Durchmessers als die Spindel (2) aufweisen, dadurch gekennzeichnet, daß die Stützrollen (14) ortsfest angeordnet und mit beidseitig vorgesehenen Rollenzapfen (19, 20) in Präzisionslagern (21, 22) kleinen Durchmessers in dem die Spindel (2) und die Stützrollen (14) aufnehmenden Gehäuse (1) gelagert sind.

2. Lagerung nach Anspruch 1, dadurch gekennzeichnet, daß die Spindel (2) als Lagerflächen gegeneinander geneigte Kegelabschnitte (15, 16) aufweist und daß die Stützrollen (14) mit ihrer Achse parallel zur Mantelfläche der Kegelabschnitte angeordnet und wenigstens die Stützrollen (14) eines Lagers (12, 13) achsparallel zur Spindel (2) verstellbar sind.

3. Lagerung nach Anspruch 1 oder 2, dadurch gekennzeichnet, daß die Stützrollen (14) wenigstens eines Lagers (12, 13) einzeln und/oder gemeinsam achsparallel zur Spindel (2) verstellbar sind.

4. Lagerung nach einem der Ansprüche 1 bis 4, dadurch gekennzeichnet, daß jede einzelne Stützrolle (14) durch Druckmittel oder Federkraft (13) verstellbar ist.

5. Lagerung nach einem der Ansprüche 1 bis 4, dadurch gekennzeichnet, daß die Stützrollen (14) eines Lagers (13) mittels eines Stellmotors gemeinsam verstellbar sind.

6. Lagerung nach einem der Ansprüche 1 bis 5, dadurch gekennzeichnet, daß die Stützrollen (14) nur des hinteren Lagers (13) achsparallel zur Spindel (2) verstellbar sind.

7. Lagerung nach einem der Ansprüche 1 bis 6, dadurch gekennzeichnet, daß die Stützrollen (14) eine ballige Lauffläche (18) aufweisen.

8. Lagerung nach einem der Ansprüche 1 bis 7, dadurch gekennzeichnet, daß die Spindel (2) mittels eines auf ihr sitzenden HF-Motors (4, 6) angetrieben ist und daß die Lager (12, 13) beiderseits des HF-Motors angeordnet sind.

## Claims

1. Bearing support for high speed spindles of machine tools, particularly grinding machines, with at least one front bearing (12) positioned close to the spindle flange (3) and a rear bearing (13), which in each case have at least three support rolls (14) acting equiangularly on the spindle (2) and having a larger diameter than said spindle (2), characterized in that the support rolls (14) are arranged in fixed manner and having roll pins (19, 20) provided on both sides in small diameter precision bearings (21, 22) in which the spindle (2) and the casing (1) receiving the support rolls (14) are mounted.

2. Bearing support according to claim 1, characterized in that the spindle (2) has as bearing surfaces conical portions (15, 16) inclined against one another and that the support rolls (14) are arranged with their axis parallel to the circumferential surface of the conical portions and at least the support rolls (14) of one bearing (12, 13) are adjustable axially parallel to the spindle (2).

3. Bearing support according to claims 1 or 2, characterized in that the support rolls (14) of at least one bearing (12, 13) are adjustable individually and/or jointly axially parallel to the spindle (2).

4. Bearing support according to one of the claims 1 to 4, characterized in that each individual support roll (14) is adjustable by pressure medium or spring tension (33).

5. Bearing support according to one of the claims 1 to 4, characterized in that the support rolls (14) of a bearing (13) are jointly adjustable by means of a servomotor.

6. Bearing support according to one of the claims 1 to 5, characterized in that the support rolls (14) of only the rear bearing (13) are adjustable axially parallel to the spindle (2).

7. Bearing support according to one of the claims 1 to 6, characterized in that the support rolls (14) have a cambered bearing surface (18).

8. Bearing support according to one of the claims 1 to 7, characterized in that the spindle (2) is driven by means of a h.f. motor (4, 6) carried thereon and that the bearings (12, 13) are positioned on either side of the h.f. motor.

## Revendications

1. Palier pour des broches de machines-outils tournant à grande vitesse, en particulier de machines à rectifier, comprenant au moins un palier antérieur disposé à proximité du faux-plateau (3) de la broche et un palier postérieur (12, 13) , qui comportent à chaque fois au moins trois rouleaux d'appui (14) agissant sous le même angle sur la broche (2), dont le diamètre est plus grand que celui de ladite broche (2), **caractérisé en ce** que les rouleaux d'appui (14) sont montés de manière fixe et logés avec des tourillons de rouleau (19, 20) prévus des deux côtés, dans des paliers de précision (21, 22) de faible diamètre dans la boîte (1) recevant la broche (2) et les rouleaux d'appui (14).

2. Palier selon la revendication 1, caractérisé en ce que la broche (2) comporte comme surfaces d'appui des sections coniques (15, 16) inclinées les unes vers les autres, que les rouleaux d'appui (14) sont orientés avec leur axe parallèlement à la surface latérale des sections coniques et qu'au moins les rouleaux d'appui (14) de l'un des paliers (12, 13) peuvent être déplacés parallèlement à l'axe par rapport à la broche (2).

3. Palier selon l'une des revendications 1 ou 2, caractérisé en ce que les rouleaux d'appui (14) d'au moins l'un des paliers (12, 13) peuvent être réglés individuellement et/ou ensemble parallèlement à l'axe par rapport à la broche

4. Palier selon l'une des revendications 1 à 3, caractérise, en ce que chaque rouleau d'appui (14) individuel peut être réglé par un fluide sous pression ou par la force d'un ressort (13).

5. Palier selon l'une des revendications 1 à 4, caractérisé en ce que les rouleaux d'appui (14) de l'un des paliers (13) peuvent être déplacés simultanément au moyen d'un servomoteur.

6. Palier selon l'une des revendications 1 à 5, caractérisé en ce que seuls les rouleaux d'appui (14) du palier postérieur (13) peuvent être déplacés parallèlement à l'axe par rapport à la broche (2).

7. Palier selon l'une des revendications 1 à 6, caractérisé en ce que les rouleaux d'appui (14) présentent une surface de roulement (18) bombée.

8. Palier selon l'une des revendications 1 à 7, caractérisé en ce que la broche (2) est entraînée au moyen d'un moteur HF (4, 6) monté sur ladite broche, et que les paliers (12, 13) sont disposés de part et d'autre du moteur HF.
